# EUROPÄISCHE PATENTSCHRIFT

(11) **EP 3 972 784 B1**
(45) Veröffentlichungstag und Bekanntmachung des Hinweises auf die Patenterteilung: **22.02.2023**
(21) Anmeldenummer: 20727935.7
(22) Anmeldetag: 11.05.2020
(51) Int. Cl.: B25H 1/00, B25H 5/00, B23P 19/06, B25B 11/02

(54) **MONTAGEHILFE SOWIE VERFAHREN ZUR MONTAGE MITTELS DER MONTAGEHILFE**
ASSEMBLY AID AND ASSEMBLY METHOD USING THE ASSEMBLY AID
AIDE AU MONTAGE ET PROCÉDÉ DE MONTAGE AU MOYEN DE LADITE AIDE AU MONTAGE

(30) Priorität: 23.05.2019 DE 102019207593
(43) Veröffentlichungstag der Anmeldung: 30.03.2022
(73) Patentinhaber: Volkswagen Aktiengesellschaft, 38440 Wolfsburg (DE)
(72) Erfinder: METZNER, Jens, 08056 Zwickau (DE)
(86) Internationale Anmeldenummer: PCT/EP2020/063025
(87) Internationale Veröffentlichungsnummer: WO 2020/234020

(56) Entgegenhaltungen:
- DE-A1-102009 036 558
- DE-A1-102014 113 565
- DE-A1-102018 001 735
- DE-A1-102018 006 276
- FR-A1- 3 036 767
- FR-A1- 3 040 649
- JP-A- H07 315 266
- US-A1- 2006 169 107

## Beschreibung

Die Erfindung betrifft eine Montagehilfe zur Montage wenigstens einer Baugruppe sowie ein Verfahren zur Montage wenigstens einer Baugruppe an einer Sockelbaugruppe mittels der Montagehilfe. Hierbei weist die Montagehilfe zumindest eine Aufnahme zur lösbaren, form- und/oder kraftschlüssigen Fixierung der wenigstens einen zu montierenden Baugruppe an der Montagehilfe auf.

Zur Herstellung von Erzeugnissen, wie beispielsweise Kraftfahrzeugen im Bereich des Kraftfahrzeugbaus, wird regelmäßig eine Vielzahl von Baugruppen miteinander sukzessive zum fertigen Erzeugnis verbunden. Dabei werden entsprechend zunächst Bauteile zu Baugruppen und kleinere Baugruppen zu größeren, aus diesen kleineren Baugruppen bestehenden Baugruppen gefügt.

Beispielshaft sei die DE 10 2014 113 565 A1 angeführt, welche die Montage, hierbei insbesondere durch Verschraubung, eines Versteifungselements an einem Hilfsrahmen beschreibt.

Überdies werden durch die DE 10 2009 036 558 A1 ferner eine Fahrwerksbaugruppe bestehend aus einem Basisträger und einem Widerlager und ein zugehöriges Verfahren zum Fügen des Basisträgers mit dem Widerlager offenbart. Hierbei wird die Verbindung von Basisträger und Widerlager ohne einen Eintrag von Wärme über wenigstens einen Nagel hergestellt, welcher ohne vorherige Ausbildung eines Lochs durch Basisträger und Widerlager getrieben wird.

Aus der gattungsbildenden FR 3 040 649 A1 geht zudem eine Montagehilfe hervor, über welche eine Baugruppe sowie die zur Befestigung der Baugruppe vorgesehenen Schrauben aufgenommen werden können.

Die FR 3 036 767 A1 offenbart eine vergleichbare Montagehilfe, hier eine Montageplatte, an welcher ein Mehrwege-Fluidanschluss relativ zu an der Montageplatte ausgeführten Indexstiften gehaltert wird. Über an einem Kraftfahrzeug ausgeführte Indexaufnahmen, in welche die Indexstifte eingreifen, lässt sich der Mehrwege-Fluidanschluss an exakt dessen Sollposition einfach montieren.

Durch die JP H07 - 315 266 A ist zudem ein Montageverfahren und eine Montagevorrichtung zum Montieren mehrerer Bauteile an einer Fahrzeugkarosserie bekannt. Die Montagevorrichtung weist dabei einen Halterahmen auf, über welchen die Bauteile in Relativpositionen zueinander, die zudem mit der Sollposition am Kraftfahrzeug korrelieren, gehaltert werden. Nach der Positionierung des Halterahmens am Kraftfahrzeug werden die Bauteile über eine Anziehvorrichtung sequentiell am Kraftfahrzeug befestigt.

Weiterhin ist der DE 10 2018 001 735 A1 eine Montagevorrichtung zur gleichzeitigen Anordnung einer Mehrzahl von Ölspritzdüsen an einer Brennkraftmaschine zu entnehmen. Die Montagevorrichtung weist hierfür Trägerrohre auf, welche schräg zu einem Tragrahmen orientiert und relativ zu dem Tragrahmen entlang ihrer Längserstreckung zwischen einer Ruhestellung und einer Montagestellung verlagerbar sind.

Darüber hinaus beschreibt die US 2006 / 0 169 107 A1 ein Schraubwerkzeug zum gleichzeitigen Anziehen zweier Schrauben. Hierfür weist das Schraubwerkzeug einen Antriebseingang, insbesondere zur Ankopplung eines Bohrschraubers, sowie zwei Abtriebsseiten auf, wobei der Antriebseingang und die beiden Abtriebsseiten über eine Zahnriemenanordnung miteinander verbunden sind.

Die DE 10 2018 006 276 A1 zeigt wiederum eine Montagehalterung sowie ein Verfahren zur Montage eines Bauteils, wobei über die Montagehilfe eine Mehrzahl an Bundschrauben halterbar ist. Hierbei lässt sich über an der Montagehilfe ausgeformte Haltestrukturen ein jeweiliger Schraubenkopfbund einer Bundschraube aufnehmen. Ferner weist die Montagehilfe Indexstifte auf, welche zur exakten Positionierung der Bundschrauben gegenüber einem Bauteil in am Bauteil ausgeformte Indexaufnahmen eingreifen.

Das Fügen der Erzeugnisse erfolgt einerseits über automatisierte Prozesse. Wenn jedoch eine Automatisierung eines Fügeprozesses nicht möglich ist, müssen diese durch Arbeitspersonen durchgeführt werden. In einer Fließfertigung steht der Arbeitsperson hierfür lediglich eine gewisse Taktzeit zur Verfügung. Sind aufwendige manuelle Fügeprozesse durchzuführen, muss diese entsprechend hoch angesetzt werden, was nachteilig zu einer verringerten Produktionsmenge an Erzeugnissen führt.

Zudem ist es beim manuellen Fügen von Bauteilen und/oder kleineren Baugruppen zu größeren Baugruppen regelmäßig notwendig, Elemente zur Ausrichtung an den Bauteilen oder Baugruppen vorzusehen, an welchen ein Abstützen und ein Ausrichten ermöglicht wird, sodass auch beim manuellen Fügen die notwendige Lage der Bauteile und/oder Baugruppen gegenüber einander sichergestellt werden kann. Dies führt nachteilig zu einem erhöhten konstruktiven und fertigungstechnischen Aufwand, was wiederum mit erhöhten Kosten verbunden ist. Zudem stellt dies insbesondere bei mehreren Baugruppen einen überaus aufwendigen Fügeprozess dar.

Vor diesem Hintergrund liegt der Erfindung die Aufgabe zugrunde, ein manuelles Fügen von Baugruppen zu vereinfachen und zudem die Dauer des Fügens zu minimieren.

Diese Aufgabe wird gelöst mit einer Montagehilfe gemäß den Merkmalen des Patentanspruchs 1. Die zugehörigen Unteransprüche betreffen besonders zweckmäßige Weiterbildungen der Erfindung.

Erfindungsgemäß ist also eine Montagehilfe zur Montage wenigstens - eines Bauteils und/oder - einer Baugruppe - hierbei insbesondere an einer Sockelbaugruppe - vorgesehen, wobei die Montagehilfe zumindest eine Aufnahme zur lösbaren, form- und/oder kraftschlüssigen - sowie insbesondere temporären - Fixierung der wenigstens einen zu montierenden Baugruppe an der Montagehilfe und zumindest eine Getriebeanordnung aufweist. Über die Getriebeanordnung ist hierbei die Drehbewegung eines Antriebselements auf wenigstens zwei Abtriebselemente übertragbar - oder auch verteilbar -, wobei die Abtriebselemente - mittelbar oder unmittelbar - jeweils auf zumindest ein Werkzeug und/oder einen Werkzeugeinsatz wirken. Zum Fügen jeder zu montierenden Baugruppe mit der Sockelbaugruppe wären an den Werkzeugen respektive den Werkzeugeinsätzen Befestigungsmittel anordenbar bzw. angeordnet, wobei die Befestigungsmittel hierbei bevorzugt als Schrauben ausgebildet sein sollten. Somit ließen sich mittels der Montagehilfe wenigstens zwei Befestigungsmittel zugleich und hierbei entsprechend je eines pro Werkzeug über lediglich ein Antriebselement betätigen und somit überaus vorteilhaft die Dauer des Fügens jeder zu montierenden Baugruppe an der Sockelbaugruppe minimieren. Im Falle von als Schrauben ausgebildeten Befestigungsmitteln entspräche die Betätigung der Befestigungsmittel entsprechend dem Einschrauben ebendieser Schrauben in korrespondierende Gewindelöcher respektive Gewindebohrungen. Der aufgrund des Betätigens des Befestigungsmittels gegebenenfalls fortlaufend entstehende Längsversatz zwischen Werkzeug oder Werkzeugeinsatz und Befestigungsmittel in Richtung der Befestigung, wie er beispielsweise durch Einbringen von Nägeln oder dem Einschrauben von Schrauben erzeugt wird, könnte beispielsweise durch ein - insbesondere manuelles - Nachführen der Montagehilfe, z. B. durch eine die Montage durchführende Arbeitsperson, ausgeglichen werden.

Denkbar ist dabei, dass lediglich eine Baugruppe oder mehr als zwei Baugruppen mittels der Montagehilfe an der Sockelbaugruppe montiert wird oder werden. Bevorzugt wäre jedoch vorgesehen, dass die Montagehilfe der Montage von zwei Baugruppen an der Sockelbaugruppe dient. Allgemein kann hierbei jede zu montierende Baugruppe zumindest einen Halter für der jeweiligen Baugruppe zugehörige Bauelemente aufweisen, über welchen die Baugruppe einerseits an der Montagehilfe fixiert sein kann und andererseits über den Halter an der Sockelbaugruppe montiert wird, wobei die Befestigungselemente insbesondere in Form von Schrauben eine kraft- und/oder formschlüssige Verbindung zwischen dem Halter der zu montierenden Baugruppe und somit entsprechend der zu montierenden Baugruppe und der Sockelbaugruppe etablieren. Die Sockelbaugruppe kann hierbei z. B. ein Vorderachs-Hilfsrahmen eines Kraftfahrzeugs sein, wobei die an dieser Sockelbaugruppe zu montierenden Baugruppen als eine Kühlwasserpumpen-Baugruppe, insbesondere mit einer Vorlaufpumpe und einer Rücklaufpumpe, sowie als eine Ventilblock-Baugruppe ausgeführt sein können. Zudem ist es dem Grunde nach möglich, dass auch ein einzelnes Bauteil als Baugruppe verstanden werden kann.

Die Montagehilfe sollte insbesondere einen im Wesentlichen rechteckförmig ausgebildeten Rahmen aufweisen, an und/oder in welchem die zumindest eine Getriebeanordnung angeordnet und zudem die wenigstens eine Aufnahme ausgebildet ist. Dabei kann es als praxisgerecht angesehen werden, wenn die zumindest eine Getriebeanordnung und jede Aufnahme an sich gegenüberliegenden Seiten der Montagehilfe angeordnet respektive ausgebildet sind.

Grundsätzlich besteht zudem zwar die Möglichkeit, dass die Montagehilfe lediglich eine Getriebeanordnung aufweist, bevorzugt verfügt die Montagehilfe jedoch über wenigstens zwei und besonders bevorzugt über zwei Getriebeanordnungen.

Das die jeweilige Getriebeanordnung antriebsseitig drehbewegende Antriebselement wie auch die abtriebsseitig mit der Getriebeanordnung verbundenen Abtriebselemente, welche ihrerseits wiederum die Werkzeuge und/oder die Werkzeugeinsätze und somit die an diesen angeordneten Befestigungsmittel antreiben, könnten in einer konstruktiv einfachen Ausgestaltung beispielsweise als Wellen und somit als Antriebswelle sowie Abtriebswellen ausgebildet sein. Es kann ferner als vorteilhaft angesehen werden, dass ein jeweiliges Antriebselement und/oder die jeweiligen Abtriebselemente zumindest einseitig in der Montagehilfe, hierbei insbesondere im Rahmen der Montagehilfe, gelagert sind. Darüber hinaus ist es eine günstige Ausgestaltung, wenn jeweilige Antriebselemente sowie die Abtriebselemente parallel zueinander ausgerichtet sind und deren Mittellängsachsen in einer Ebene liegen. Die Mittellängsachsen einer jeweiligen Getriebeanordnung zugehöriger Antriebs- und Abtriebselemente könnten hierbei minimal einen Abstand von 40 Millimetern zueinander aufweisen, wobei dieser Abstand im Allgemeinen jedoch vom Soll-Abstand der Befestigungsmittel und somit von Befestigungsmittelaufnahmen in jeder zu montierenden Baugruppe und/oder der Sockelbaugruppe sowie notwendiger Dreh- respektive Anzugsmomente abhängig ist.

In einer besonders vorteilhaften Weiterbildung der Erfindung ist jede Getriebeanordnung als ein Riementrieb ausgebildet, wobei der Riementrieb eine angetriebene Riemenscheibe und zumindest zwei über die angetriebene Riemenscheibe mittels des Riemens abgetriebene Riemenscheiben aufweist. Durch diese Ausgestaltung der Getriebeanordnung lässt sich auf konstruktiv einfache und somit gewinnbringende Weise die über das Antriebselement auf den Riementrieb wirkende Drehbewegung auf die wenigstens zwei Abtriebselemente übertragen, respektive verteilen. Hierbei wäre eine Riemenscheibe mit dem Antriebselement und je eine Riemenscheibe mit je einem Abtriebselement verbunden. Die Anzahl der Riemenscheiben entspräche somit der Anzahl an mit dem Riementrieb verbundenen Antriebs- und Abtriebselementen. Besonders bevorzugt wäre der Riementrieb ferner als ein Zahnriementrieb ausgebildet, wobei der Zahnriementrieb als Zahnriemenscheiben ausgebildete Riemenscheiben und einen als Zahnriemen ausgebildeten Riemen aufweist. Die Riemenscheiben sollten zur Reduzierung der bewegten Masse zudem aus Aluminium respektive einer Aluminiumlegierung bestehen.

Als überaus günstig zeichnet sich eine Ausführungsform der Erfindung zudem aus, wenn der Riementrieb zumindest ein Führelement zur Aufnahme und/oder Übertragung axialer Kräfte aufweist, wodurch insbesondere die in axialer Richtung oder auch Befestigungsrichtung der Abtriebselemente durch das Betätigen der Befestigungselemente auftretenden Kräfte durch den Riementrieb aufgenommen und/oder übertragen werden können. Denkbar ist dabei beispielsweise, dass der Riemen als ein Zahnriemen mit einer Mittelführung ausgebildet ist, wobei die Mittelführung in in dem Zahnriemenscheiben ausgebildete, korrespondierende Führungsaufnahmen eingreift.

Es ist zudem als erfolgversprechend anzusehen, wenn das Antriebselement als eine
- insbesondere gefederte - Antriebsspindel und/oder das Abtriebselement als eine
- insbesondere gefederte - Abtriebsspindel ausgebildet ist. Über eine Ausführung des Antriebselements und/oder der Abtriebselemente einer Getriebeanordnung als Antriebsspindel und/oder Abtriebsspindeln lässt sich überaus vorteilhaft eine Drehbewegung auf die insbesondere als Schrauben ausgebildeten Befestigungsmittel übertragen und zudem, insbesondere in gefederter Ausgestaltung, eine im Wesentlichen optimale Übertragung von Drehmomenten auf die Befestigungsmittel sicherstellen.

Eine jeweilige Antriebsspindel und/oder die Abtriebsspindeln könnten zudem im weiteren Sinne als Antriebselemente und/oder Abtriebselemente mit einer zumindest abschnittsweise ausgebildeten Gewindespindel mit zugehörigem Spindelmutter-Gegenstück verstanden werden.

Eine weitere überaus vorteilhafte Weiterbildung der Erfindung besteht darin, dass jede Getriebeanordnung pro - der Getriebeanordnung jeweilig zugeordnetem, angetriebenem - Abtriebselement eine Überholkupplung - oder auch einen Freilauf - aufweist, welche mit dem jeweiligen Abtriebselement wirkverbunden ist. Hierdurch wird es ermöglicht, dass zwischen dem Antriebselement und den mit den Überholkupplungen mittelbar oder unmittelbar verbundenen Abtriebselementen eine sich unterscheidende Drehbewegung ermöglicht wird, und hierdurch insbesondere das auf die Abtriebselemente und hierüber auf Befestigungselemente übertragbare Drehmoment begrenzt werden kann. Dies führt vorteilhaft dazu, dass sich die Befestigungselemente, insbesondere in Form von Schrauben, mit einem Soll-Anzugsmoment anziehen lassen. Das über die Überholkupplungen übertragbare Drehmoment sollte hierbei in einem Bereich zwischen 5 Nm und 12 Nm, bevorzugt 6,8 Nm und 9,2 Nm liegen. Ein Innendurchmesser der Überholkupplungen kann zudem im Bereich zwischen 5 mm bis 10 mm, ein Außendurchmesser der Überholkupplung in einem Bereich zwischen 14 mm bis 18 mm liegen. Bevorzugt beträgt der Innendurchmesser der Überholkupplungen jedoch 6 mm, der Außendurchmesser der Überholkupplungen bevorzugt 16 mm.

Günstig ist es ebenfalls, wenn über jede Getriebeanordnung die Drehbewegung eines Antriebselements auf zwei oder drei Abtriebselemente übertragbar ist. Im Falle einer Ausgestaltung des Antriebselements als Antriebsspindel und der Abtriebselemente als Abtriebsspindeln würde die Drehbewegung demnach ebenfalls von einer Antriebsspindel auf zwei Abtriebsspindeln oder einer Antriebsspindel auf drei Abtriebsspindeln übertragen. Dies stellt einen im Wesentlichen optimalen Kompromiss zwischen zu übertragendem Drehmoment und der jeweiligen Anzahl an abgetriebenen Abtriebselementen respektive Abtriebsspindeln dar.

Eine praxisgerechte Ausbildung der Erfindung liegt ferner darin, dass die Abtriebselemente zum Fixieren von Befestigungsmitteln Befestigungsmittelhalter aufweisen und/oder die Befestigungsmittelhalter magnetisch ausgebildet sind, sodass diese eine Haltekraft, insbesondere eine Magnethaltekraft, auf die Befestigungsmittel ausüben. Somit lassen sich die zum Fügen jeder zu montierenden Baugruppe an der Sockelbaugruppe benötigten Befestigungsmittel an der Montagehilfe lösbar fixieren, wobei diese z. B. durch eine Arbeitsperson zugleich an der Montagehilfe angeordnet werden können und dabei die Wahrscheinlichkeit des Lösens der Befestigungsmittel vor dem Fügevorgang minimiert wird. Im Falle einer magnetischen Ausbildung des Befestigungsmittelhalters könnte dieser selbst aus einem magnetischen, insbesondere einem hartmagnetischen Werkstoff bestehen oder einen Magneten, und hierbei insbesondere einen Ringmagneteinsatz, aufweisen. Der Befestigungsmittelhalter sollte zudem als Teil des Werkzeugs und/oder des Werkzeugeinsatzes ausgebildet sein.

Vorteilhaft gestaltet es sich zudem, wenn die Montagehilfe eine Halte- und Versatzmechanik
- hierbei insbesondere zum Senken und/oder Heben der Montagehilfe - mit wenigstens einem Verstellelement aufweist, wobei mittels der Versatzmechanik ein Versatz der Montagehilfe gegenüber dem zu montierenden Bauteil bewirkbar ist. Dieser Versatz sollte dabei insbesondere in Richtung der Hochachse der Montagehilfe respektive normal zur Ebene, in welcher die Antriebs- sowie Abtriebsmittel liegen, erfolgen. Die insbesondere am Rahmen der Montagehilfe angeordnete Halte- und Versatzmechanik kann hierbei zweigeteilt ausgeführt sein, wobei ein jeweiliger Teil an gegenüberliegenden Seiten des Rahmens der Montagehilfe angeordnet wäre. Das Verstellelement, über welches der Versatz der Halte- und Versatzmechanik bewirkt werden kann, kann insbesondere durch eine Arbeitsperson manuell betätigt werden. Hierbei ist es möglich, dass das Verstellelement als ein Schnellspanner ausgeführt ist. Neben dem Bewirken des Versatzes dient die Halte- und Versatzmechanik der Anordnung der Montagehilfe an der Sockelbaugruppe, wofür diese Referenzelementaufnahmen für an der Sockelbaugruppe ausgeformte Referenzelemente aufweisen sollte. Somit ließe sich auf einfache Weise die Montagehilfe und somit jede zu montierende Baugruppe sowie die Befestigungselemente gegenüber der Sockelbaugruppe in einer Sollposition oder auch Fügeposition positionieren.

Eine Weiterbildung der Erfindung ist zudem dadurch als gewinnbringend gekennzeichnet, dass zur - insbesondere in Richtung der Längs- und Querachse der Montagehilfe bewirkten - formschlüssigen Fixierung jeder zu montierenden Baugruppe jede Aufnahme als eine Aufnahmestruktur oder eine Gruppe von Aufnahmestrukturen in der Montagehilfe ausgeformt ist. Durch diese Ausgestaltung der je eine Baugruppe fixierenden Aufnahmen kann es vorteilhaft ermöglicht werden, jede Baugruppe nach der Montage an der Sockelbaugruppe in einfacher Weise durch einen Versatz der Montagehilfe von der Montagehilfe zu lösen.

Als vielversprechend lässt es sich weiterhin ansehen, wenn in einer Weiterbildung der Erfindung zumindest ein Bestandteil aus einer kinematischen Kette bestehend aus einer jede Getriebeanordnung aufnehmenden Traverse der Montagehilfe, jedes Antriebselements, jeder Getriebeanordnung und jedes Abtriebselements längsverschieblich ausgebildet ist. Insbesondere sollte hierbei die Traverse der Montagehilfe oder zumindest Teile der Traverse, in welchen jeweilige Getriebeanordnungen angeordnet sind, längsverschieblich ausgebildet sein. Hierüber kann zugleich der aufgrund des Betätigens des Befestigungsmittels fortlaufend entstehende Längsversatz zwischen Werkzeug oder Werkzeugeinsatz und Befestigungsmittel in Richtung der Befestigung ausgeglichen werden, ohne dass die Montagehilfe insbesondere durch eine die Montage durchführende Arbeitsperson nachgeführt werden muss, und zudem eine Betätigung der Befestigungsmittel über die Abtriebselemente sichergestellt werden.

Die Aufgabe wird weiterhin gelöst mit einem Verfahren gemäß den Merkmalen des Patentanspruchs 11. Die zugehörigen Unteransprüche betreffen besonders zweckmäßige Weiterbildungen der Erfindung.

Erfindungsgemäß ist somit ein Verfahren zur Montage wenigstens - eines Bauteils und/oder - einer Baugruppe an einer Sockelbaugruppe mittels der Montagehilfe vorgesehen, wobei zum Fügen jeder über Befestigungsmittel an der Sockelbaugruppe zu montierenden Baugruppe mittels der Montagehilfe zugleich mehr als eins der Befestigungsmittel betätigt wird. Somit werden mittels der Montagehilfe wenigstens zwei Befestigungsmittel zugleich und hierbei entsprechend je eins pro Werkzeug über lediglich ein Antriebselement betätigt, wodurch sich überaus vorteilhaft die Dauer des Fügens jeder zu montierenden Baugruppe an der Sockelbaugruppe und dadurch die Taktzeit minimieren lässt. Im Falle von als Schrauben ausgebildeten Befestigungsmitteln entspräche die Betätigung der Befestigungsmittel entsprechend dem Einschrauben ebendieser Schrauben in korrespondierende Gewindelöcher respektive Gewindebohrungen.

Eine vorteilhafte Weiterbildung des erfindungsgemäßen Verfahrens besteht darin, dass die Montagehilfe, zur Positionierung jeder Baugruppe sowie der Befestigungsmittel gegenüber der Sockelbaugruppe, über die Halte- und Versatzmechanik an zumindest zwei an der Sockelbaugruppe ausgebildeten Referenzelementen angeordnet wird. Somit lässt sich auf einfache Weise die Montagehilfe und somit jede zu montierende Baugruppe sowie die an den Werkzeugen lösbar fixierten Befestigungselemente gegenüber der Sockelbaugruppe in einer Soll-, Referenz- oder auch Fügeposition positionieren.

Eine Ausführungsform des erfindungsgemäßen Verfahrens stellt sich überdies als gewinnbringend dar, wenn die Montagehilfe, zum durch die Betätigung der Befestigungsmittel bewirkten Fügen jeder zu montierenden Baugruppe mit der Sockelbaugruppe, über die Halte- und Versatzmechanik in einer Fügeposition an der Sockelbaugruppe angeordnet oder auf die Anordnung an der Sockelbaugruppe folgend in Fügeposition versetzt wird, wobei die Befestigungsmittel in der Fügeposition mit mit den Befestigungsmitteln zusammenwirkenden Befestigungsmittelaufnahmen fluchten. Hierdurch wird das Fügen jeder an der Sockelbaugruppe über das Betätigen der Befestigungselemente zu montierenden Baugruppe vorteilhaft vereinfacht. Das Versetzen in die Fügeposition sollte dabei insbesondere in Richtung der Hochachse der Montagehilfe, respektive normal zur Ebene, in welcher die Antriebs- sowie Abtriebselemente liegen, erfolgen.

Überaus günstig ist es ebenfalls, wenn, auf das - durch Betätigung der Befestigungsmittel bewirkte - Fügen jeder Baugruppe mit der Sockelbaugruppe folgend, die Montagehilfe mittels der Halte- und Versatzmechanik gegenüber jeder montierten Baugruppe - und somit auch der Sockelbaugruppe - aus der Fügeposition versetzt wird. Hierdurch kann die Montagehilfe in einfacher Weise von jeder montierten Baugruppe sowie der Sockelbaugruppe unter Vermeidung einer Kollision entfernt werden.

Eine nutzbringende Gestaltungsform des erfindungsgemäßen Verfahrens ist zudem dadurch gekennzeichnet, dass durch das auf das Fügen jeder Baugruppe mit der Sockelbaugruppe folgende Versetzen der Montagehilfe aus der Fügeposition mittels der Halte- und Versatzmechanik jede in zugehöriger Aufnahme der Montagehilfe fixierte Baugruppe aus der Aufnahme gelöst wird. Dies kann unter anderem dahingehend als vorteilhaft angesehen werden, dass beispielsweise durch eine Arbeitsperson kein weiterer Handhabungsprozess durchgeführt werden muss, um jede montierte Baugruppe aus der jeweiligen Aufnahme der Montagehilfe zu lösen, was vorteilhaft die Dauer des Fügevorgangs und somit die notwendige Taktzeit zur Montage jeder Baugruppe an der Sockelbaugruppe minimiert.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Weiterbildung der im Wesentlichen rechteckförmig ausgebildeten Montagehilfe;
- Fig. 2: die Montagehilfe in einer zweiten Darstellung;
- Fig. 3: eine vereinfachte Darstellung der Montagehilfe;
- Fig. 4: eine Montagehilfe mit fünf Antriebselementen.

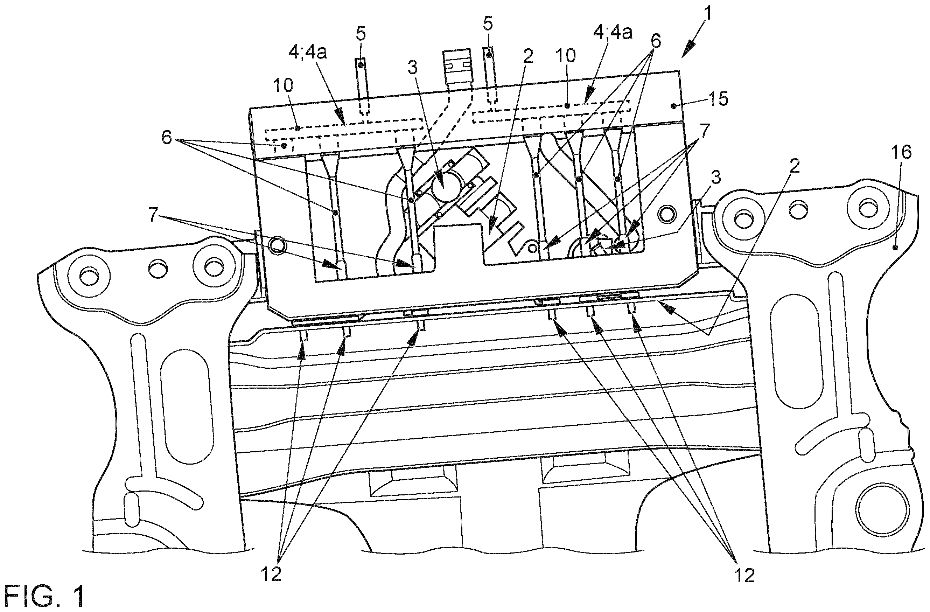

Figur 1 zeigt eine Weiterbildung der im Wesentlichen rechteckförmig ausgebildeten Montagehilfe 1 zur Montage der zwei Baugruppen 3 an der Sockelbaugruppe 16. Die Montagehilfe 1 weist dabei je zu montierender Baugruppe 3 eine Aufnahme 2 zur lösbaren, form- und/oder kraftschlüssigen Fixierung der Baugruppen 3 an der Montagehilfe 1 auf. Zudem verfügt die Montagehilfe 1 über zwei als Riementriebe 4a mit den Riemen 10 ausgeführte Getriebeanordnungen 4. Mit jeder der zwei Getriebeanordnungen 4 ist antriebsseitig ein Antriebselement 5 verbunden, wobei über die Getriebeanordnungen 4 die Drehbewegung des jeweils zugeordneten Antriebselements 5 auf drei mit der Getriebeanordnung 4 abtriebsseitig verbundene Abtriebselemente 6 übertragbar ist. Die Abtriebselemente 6 wirken hierbei jeweils auf ein Werkzeug 7, wobei in den Werkzeugen 7 je ein Befestigungsmittel 12 in Form einer Schraube lösbar fixiert ist. Hierdurch lässt sich die über das jeweilige Antriebselement 5 eingeleitete Drehbewegung auf jeweils drei Befestigungsmittel 12 übertragen und die Befestigungsmittel 12 somit betätigen, was in diesem Falle einem Einschrauben der als Schrauben ausgebildeten Befestigungsmittel 12 entspricht. Diese Betätigung der Befestigungsmittel 12 bewirkt dabei das Fügen der Baugruppen 3 an der Sockelbaugruppe 16. Zum Ausgleich des bei der Betätigung der Befestigungsmittel 12 entstehenden Längsversatzes zwischen den Abtriebselementen 6, respektive den Werkzeugen 7 und den Befestigungsmitteln 12, ist die die Getriebeanordnungen 4 aufnehmende Traverse 15 der Montagehilfe 1 zudem in Richtung der Längsachsen der Abtriebselemente 6 längsverschieblich ausgeführt.

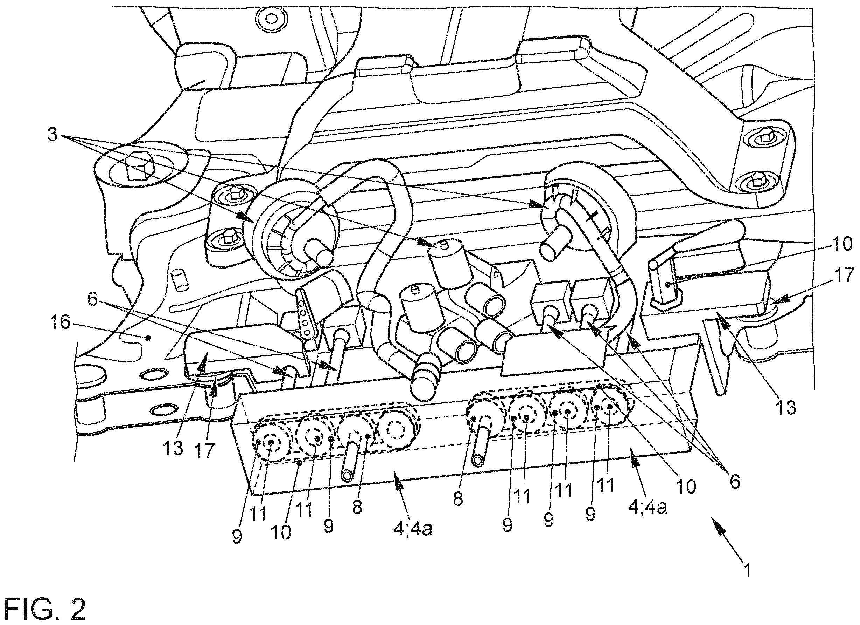

Figur 2 zeigt die Montagehilfe 1 in einer zweiten Darstellung, welche die zwei als Riementrieb 4a ausgebildeten Getriebeanordnungen 4 im Genaueren beschreibt. Ein jeweiliger Riementrieb 4a, welcher im Speziellen als Zahnriementrieb ausgebildet ist, weist dabei die angetriebene Riemenscheibe 8 und drei über die angetriebene Riemenscheibe 8 mittels des Riemens 10 abgetriebene Riemenscheiben 9 auf. Die angetriebene Riemenscheibe 8 sowie die abgetriebenen Riemenscheiben 9 sind entsprechend als Zahnriemenscheiben, der Riemen 10 als Zahnriemen ausgebildet. Zudem weist jede als Riementrieb 4a ausgebildete Getriebeanordnung 4 pro Abtriebselement 6 eine Überholkupplung 11 auf, welche mit dem jeweiligen Abtriebselement 6 und der jeweiligen abgetriebenen Riemenscheibe 9 wirkverbunden ist. Ferner weist die Montagehilfe 1 zudem die zweiteilige Halte- und Versatzmechanik 13 mit dem als Schnellspanner ausgeführten Verstellelement 14 auf. Mittels der Halte- und Versatzmechanik 13 ist hierbei ein Versatz der Montagehilfe 1 gegenüber jeder zu montierenden Baugruppe 3 sowie der Sockelbaugruppe 16 bewirkbar. Hierfür ist die Montagehilfe 1 über die Halte- und Versatzmechanik 13 an zwei an der Sockelbaugruppe 16 ausgebildeten Referenzelementen 17 angeordnet, wofür die Teile der Halte- und Versatzmechanik 13 jeweils eine Referenzelementaufnahme aufweisen, in welche die Referenzelemente 17 fixierend eingreifen. Dies dient zudem der Positionierung jeder zu montierenden Baugruppe 3 sowie der Befestigungsmittel 12 gegenüber der Sockelbaugruppe 16, wobei die Montagehilfe 1 zum durch die Betätigung der Befestigungsmittel 12 bewirkten Fügen jeder zu montierenden Baugruppe 3 mit der Sockelbaugruppe 16 über die Halte- und Versatzmechanik 13 in der dargestellten Fügeposition an der Sockelbaugruppe 16 angeordnet ist. Auf das Fügen der Baugruppen 3 mit der Sockelbaugruppe 16 folgend, wird die Montagehilfe 1 dann mittels der Halte- und Versatzmechanik 13 gegenüber jeder montierten Baugruppe 3 sowie der Sockelbaugruppe 16 aus der Fügeposition, hierbei normal zu einer Ebene, in welcher die Mittellängsachsen der Antriebselemente 5 und der Abtriebselemente 6 liegen, sowie der Sockelbaugruppe 16 abgewandt, versetzt.

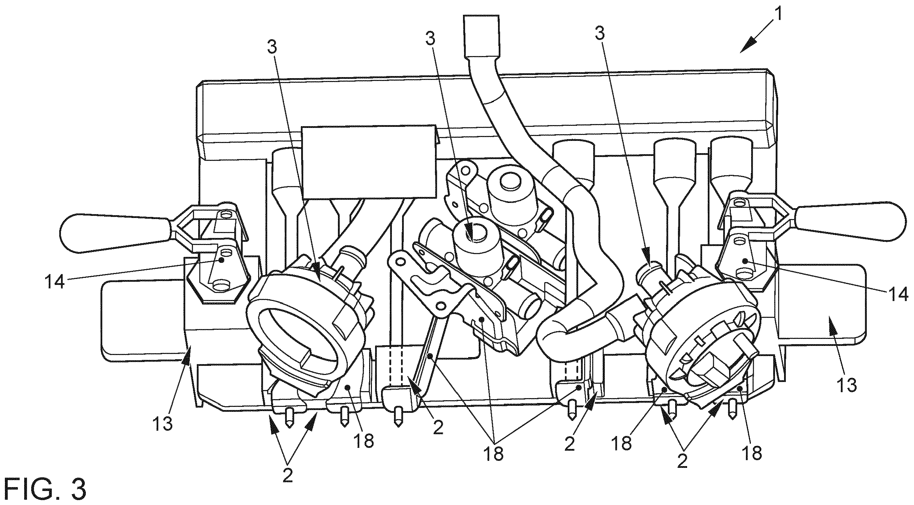

In Figur 3 ist eine vereinfachte Darstellung der Montagehilfe 1 aufgezeigt, wobei zur formschlüssigen Fixierung jeder zu montierenden Baugruppe 3 jede Aufnahme 2 als eine Gruppe von Aufnahmestrukturen in der Montagehilfe 1 ausgeformt ist. Die Baugruppen 3 weisen hierfür jeweils Bauelementhalter 18 auf, an welchen die den Baugruppen 3 zudem zugehörigen Bauelemente befestigt sind und welche überdies in den Aufnahmestrukturen angeordnet sind sowie sich teilweise an diese anlegen. Hierdurch wird vorteilhaft das auf das Fügen jeder Baugruppe 3 mit der in den Figuren 1 und 2 dargestellten Sockelbaugruppe 16 folgende Lösen der in den Aufnahmen 2 der Montagehilfe 1 fixierten Baugruppen 3 durch das Versetzen der Montagehilfe 1 aus der Fügeposition mittels der Halte- und Versatzmechanik 13 ermöglicht. Hierbei ist der Darstellung zu entnehmen, dass die Teile der Halte- und Versatzmechanik 13 jeweils ein Verstellelement 14 aufweisen, deren Verschwenken das Versetzen der Montagehilfe 1 bewirkt.

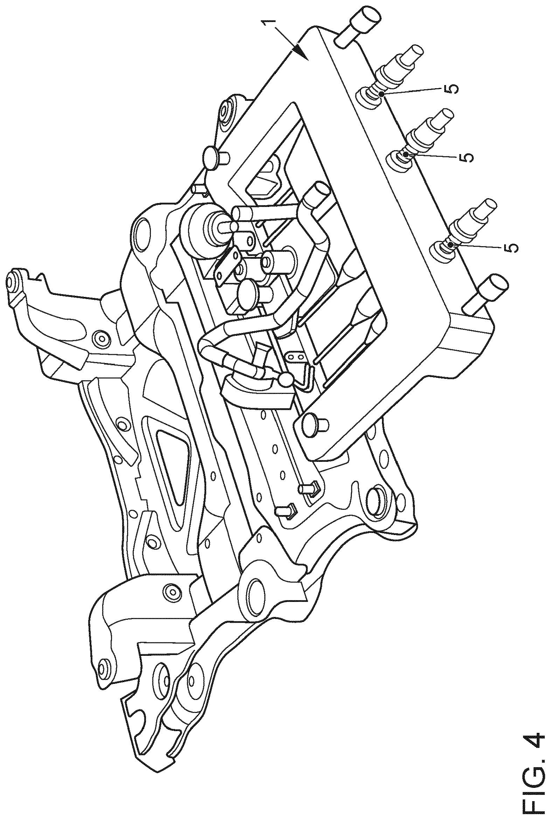

Figur 4 beschreibt zudem eine Montagehilfe 1, bei welcher fünf Antriebselemente 5 ausgeführt sind.

### Bezugszeichenliste

- 1: Montagehilfe
- 2: Aufnahme
- 3: Baugruppe
- 4: Getriebeanordnung
- 4a: Riementrieb
- 5: Antriebselement

- 6: Abtriebselement
- 7: Werkzeug
- 8: Riemenscheibe
- 9: Riemenscheibe
- 10: Riemen

- 11: Überholkupplung
- 12: Befestigungsmittel
- 13: Halte- und Versatzmechanik
- 14: Verstellelement
- 15: Traverse

- 16: Sockelbaugruppe
- 17: Referenzelement
- 18: Bauelementhalter

## Patentansprüche

1. Montagehilfe (1) zur Montage wenigstens einer Baugruppe (3), wobei die Montagehilfe (1) zumindest eine Aufnahme (2) zur lösbaren, form- und/oder kraftschlüssigen Fixierung der wenigstens einen zu montierenden Baugruppe (3) an der Montagehilfe (1) aufweist, **dadurch gekennzeichnet, dass** die Montagehilfe (1) zudem zumindest eine Getriebeanordnung (4) aufweist, über welche die Drehbewegung eines Antriebselements (5) auf wenigstens zwei Abtriebselemente (6) übertragbar ist, wobei die Abtriebselemente (6) jeweils auf zumindest ein Werkzeug (7) und/oder einen Werkzeugeinsatz wirken.

2. Montagehilfe (1) nach Anspruch 1, **dadurch gekennzeichnet, dass** jede Getriebeanordnung (4) als ein Riementrieb (4a) ausgebildet ist, wobei der Riementrieb (4a) eine angetriebene Riemenscheibe (8) und zumindest zwei über die angetriebene Riemenscheibe (8) mittels eines Riemens (10) abgetriebene Riemenscheiben (9) aufweist.

3. Montagehilfe (1) nach den Ansprüchen 1 oder 2, **dadurch gekennzeichnet, dass** der Riementrieb (4a) zumindest ein Führelement zur Aufnahme und/oder Übertragung axialer Kräfte aufweist.

4. Montagehilfe (1) nach zumindest einem der vorangehenden Ansprüche, **dadurch gekennzeichnet, dass** das Antriebselement (5) als eine Antriebsspindel und/oder das Abtriebselement (6) als eine Abtriebsspindel ausgebildet ist.

5. Montagehilfe (1) nach zumindest einem der vorangehenden Ansprüche, **dadurch gekennzeichnet, dass** jede Getriebeanordnung (4) pro Abtriebselement (6) eine Überholkupplung (11) aufweist, welche mit dem jeweiligen Abtriebselement (6) wirkverbunden ist.

6. Montagehilfe (1) nach zumindest einem der vorangehenden Ansprüche, **dadurch gekennzeichnet, dass** über jede Getriebeanordnung (4) die Drehbewegung des Antriebselements (5) auf zwei Abtriebselemente (6) oder auf drei Abtriebselemente (6) übertragbar ist.

7. Montagehilfe (1) nach zumindest einem der vorangehenden Ansprüche, **dadurch gekennzeichnet, dass** die Abtriebselemente (6) zum Fixieren von Befestigungsmitteln (12) Befestigungsmittelhalter aufweisen und/oder die Befestigungsmittelhalter magnetisch ausgebildet sind.

8. Montagehilfe (1) nach zumindest einem der vorangehenden Ansprüche, **dadurch gekennzeichnet, dass** die Montagehilfe (1) eine Halte- und Versatzmechanik (13) mit wenigstens einem Verstellelement (14) aufweist, wobei mittels der Halte- und Versatzmechanik (13) ein Versatz der Montagehilfe (1) gegenüber jeder zu montierenden Baugruppe (3) bewirkbar ist.

9. Montagehilfe (1) nach zumindest einem der vorangehenden Ansprüche, **dadurch gekennzeichnet, dass** zur formschlüssigen Fixierung jeder zu montierenden Baugruppe (3) jede Aufnahme (2) als eine Aufnahmestruktur oder eine Gruppe von Aufnahmestrukturen in der Montagehilfe (1) ausgeformt ist.

10. Montagehilfe (1) nach zumindest einem der vorangehenden Ansprüche, **dadurch gekennzeichnet, dass** zumindest ein Bestandteil aus einer kinematischen Kette bestehend aus einer jede Getriebeanordnung (4) aufnehmenden Traverse (15) der Montagehilfe (1), jedes Antriebselements (5), jeder Getriebeanordnung (4) und jedes Abtriebselements (6) längsverschieblich ausgebildet ist.

11. Verfahren zur Montage wenigstens einer Baugruppe (3) an einer Sockelbaugruppe (16) mittels der Montagehilfe (1) nach zumindest einem der vorangehenden Ansprüche, wobei zum Fügen jeder über Befestigungsmittel (12) an der Sockelbaugruppe (16) zu montierenden Baugruppe (3) mittels der Montagehilfe (1) zugleich mehr als eines der Befestigungsmittel (12) betätigt wird.

12. Verfahren nach Anspruch 11, **dadurch gekennzeichnet, dass** die Montagehilfe (1), zur Positionierung jeder zu montierenden Baugruppe (3) sowie der Befestigungsmittel (12) gegenüber der Sockelbaugruppe (16), über die Halte- und Versatzmechanik (13) an zumindest zwei an der Sockelbaugruppe (16) ausgebildeten Referenzelementen (17) angeordnet wird.

13. Verfahren nach zumindest einem der vorangehenden Ansprüche 11 oder 12, **dadurch gekennzeichnet, dass** die Montagehilfe (1), zum durch die Betätigung der Befestigungsmittel (12) bewirkten Fügen jeder zu montierenden Baugruppe (3) mit der Sockelbaugruppe (16), über die Halte- und Versatzmechanik (13) in einer Fügeposition an der Sockelbaugruppe (16) angeordnet oder auf die Anordnung an der Sockelbaugruppe (16) folgend in Fügeposition versetzt wird, wobei die Befestigungsmittel (12) in der Fügeposition mit mit den Befestigungsmitteln (12) zusammenwirkenden Befestigungsmittelaufnahmen fluchten.

14. Verfahren nach zumindest einem der vorangehenden Ansprüche 11 bis 13, **dadurch gekennzeichnet, dass** auf das Fügen jeder Baugruppe (3) mit der Sockelbaugruppe (16) folgend, die Montagehilfe (1) mittels der Halte- und Versatzmechanik (13) gegenüber jeder montierten Baugruppe (3) aus der Fügeposition versetzt wird.

15. Verfahren nach zumindest einem der vorangehenden Ansprüche 11 bis 14, **dadurch gekennzeichnet, dass** durch das auf das Fügen jeder Baugruppe (3) mit der Sockelbaugruppe (16) folgende Versetzen der Montagehilfe (1) aus der Fügeposition mittels der Halte- und Versatzmechanik (13), jede in zugehöriger Aufnahme (2) der Montagehilfe (1) fixierte Baugruppe (3) aus der Aufnahme (2) gelöst wird.

## Claims

1. Assembly aid (1) for assembling at least one assembly (3), the assembly aid (1) having at least one receptacle (2) for releasably, form-fittingly and/or frictionally fixing the at least one assembly (3) to be assembled to the assembly aid (1),
**characterized in that** the assembly aid (1) also has at least one gear transmission arrangement (4) by means of which the rotational movement of a drive element (5) can be transmitted to at least two output elements (6), the output elements (6) each acting on at least one tool (7) and/or one tool insert.

2. Assembly aid (1) according to claim 1, **characterized in that** each gear transmission arrangement (4) is designed as a belt drive (4a), the belt drive (4a) having a driven pulley (8) and at least two belt pulleys (9) driven by means of a belt (10) via the driven pulley (8).

3. Assembly aid (1) according to claims 1 or 2, **characterized in that** the belt drive (4a) has at least one guide element for receiving and/or transmitting axial forces.

4. Assembly aid (1) according to at least one of the preceding claims, **characterized in that** the drive element (5) is designed as a drive spindle and/or the output element (6) is designed as an output spindle.

5. Assembly aid (1) according to at least one of the preceding claims, **characterized in that** each gear transmission arrangement (4) has an overrunning clutch (11) per output element (6), which clutch is operatively connected to the relevant output element (6).

6. Assembly aid (1) according to at least one of the preceding claims, **characterized in that** the rotational movement of the drive element (5) can be transmitted to two output elements (6) or to three output elements (6) via each gear transmission arrangement (4).

7. Assembly aid (1) according to at least one of the preceding claims, **characterized in that** the output elements (6) for fixing fastening means (12) have fastening means holders and/or the fastening means holders are magnetic.

8. Assembly aid (1) according to at least one of the preceding claims, **characterized in that** the assembly aid (1) comprises a holding and offsetting mechanism (13) having at least one adjusting element (14), it being possible for an offset of the assembly aid (1) relative to each assembly (3) to be assembled to be brought about by means of the holding and offsetting mechanism (13).

9. Assembly aid (1) according to at least one of the preceding claims, **characterized in that** for the form-fitting fixing of each assembly (3) to be assembled, each receptacle (2) is formed as a receiving structure or a group of receiving structures in the assembly aid (1).

10. Assembly aid (1) according to at least one of the preceding claims, **characterized in that** at least one component from a kinematic chain consisting of a cross-beam (15) of the assembly aid (1), which cross-beam receives each gear transmission arrangement (4), each drive element (5), each gear transmission arrangement (4) and each output element (6), is designed to be longitudinally displaceable.

11. Method for assembling at least one assembly (3) on a base assembly (16) by means of the assembly aid (1) according to at least one of the preceding claims, wherein, for joining each assembly (3) to be assembled via fastening means (12) to the base assembly (16), more than one of the fastening means (12) is simultaneously actuated by means of the assembly aid (1).

12. Method according to claim 11, **characterized in that** the assembly aid (1), for positioning each assembly (3) to be assembled and the fastening means (12) relative to the base assembly (16), is arranged on at least two reference elements (17) formed on the base assembly (16) via the holding and offsetting mechanism (13).

13. Method according to at least one of the preceding claims 11 or 12, **characterized in that** the assembly aid (1), for joining each assembly (3) to be assembled on the base assembly (16) via actuation of the fastening means (12), is arranged in a joining position on the base assembly (16) via the holding and offsetting mechanism (13) or, following the arrangement on the base assembly (16), is displaced into the joining position, the fastening means (12) in the joining position being aligned with fastening means receptacles interacting with the fastening means (12).

14. Method according to at least one of the preceding claims 11 to 13, **characterized in that,** following the joining of each assembly (3) to the base assembly (16), the assembly aid (1) is displaced from the joining position with respect to each assembled assembly (3) by means of the holding and offsetting mechanism (13).

15. Method according to at least one of the preceding claims 11 to 14, **characterized in that** via the displacement of the assembly aid (1) from the joining position by means of the holding and offsetting mechanism (13), which displacement follows the joining of each assembly (3) to the base assembly (16), each assembly (3) fixed in the associated receptacle (2) of the assembly aid (1) is released from the receptacle (2).

## Revendications

1. Aide au montage (1) pour le montage d'au moins un assemblage (3), l'aide au montage (1) présentant au moins un logement (2) pour la fixation amovible par complémentarité de forme et/ou de force de l'au moins un assemblage (3) à monter sur l'aide au montage (1), **caractérisée en ce que** l'aide au montage (1) présente en outre au moins un agencement d'engrenage (4), à travers lequel le mouvement de rotation d'un élément d'entraînement (5) peut être transféré à au moins deux éléments de sortie (6), les éléments de sortie (6) agissant respectivement sur au moins un outil (7) et/ou un insert d'outil.

2. Aide au montage (1) selon la revendication 1, **caractérisée en ce que** chaque agencement d'engrenage (4) est conçu comme un entraînement par courroie (4a), l'entraînement par courroie (4a) présentant une poulie (8) entraînée et au moins deux poulies (9) entraînées à travers la poulie (8) entraînée au moyen d'une courroie (10).

3. Aide au montage (1) selon les revendications 1 ou 2,
**caractérisée en ce que** l'entraînement par courroie (4a) présente au moins un élément de guidage pour la réception et/ou la transmission de forces axiales.

4. Aide au montage (1) selon au moins l'une quelconque des revendications précédentes, **caractérisée en ce que** l'élément d'entraînement (5) est conçu comme une broche d'entraînement et/ou l'élément de sortie (6) est conçu comme une broche de sortie.

5. Aide au montage (1) selon au moins l'une quelconque des revendications précédentes, **caractérisée en ce que** chaque agencement d'engrenage (4) par élément de sortie (6) présente un embrayage à roue libre (11), qui est en liaison active avec l'élément de sortie (6) respectif.

6. Aide au montage (1) selon au moins l'une quelconque des revendications précédentes, **caractérisée en ce que,** à travers chaque agencement d'engrenage (4), le mouvement de rotation de l'élément d'entraînement (5) peut être transmis à deux éléments de sortie (6) ou à trois éléments de sortie (6).

7. Aide au montage (1) selon au moins l'une quelconque des revendications précédentes, **caractérisée en ce que** les éléments de sortie (6) présentent des supports de moyens de fixation pour la fixation de moyens de fixation (12) et/ou les supports de moyens de fixation sont conçus magnétiques.

8. Aide au montage (1) selon au moins l'une quelconque des revendications précédentes, **caractérisée en ce que** l'aide au montage (1) présente un mécanisme de maintien et de décalage (13) comprenant au moins un élément de décalage (14), un décalage de l'aide au montage (1) par rapport à chaque assemblage (3) à monter pouvant être provoqué au moyen du mécanisme de maintien et de décalage (13).

9. Aide au montage (1) selon au moins l'une quelconque des revendications précédentes, **caractérisée en ce que** pour la fixation par complémentarité de forme de chaque assemblage (3) à monter, chaque logement (2) est formé comme une structure de logement ou un groupe de structures de logement dans l'aide au montage (1).

10. Aide au montage (1) selon au moins l'une quelconque des revendications précédentes, **caractérisée en ce qu'**au moins un composant d'une chaîne cinématique composée d'une traverse (15) de l'aide au montage (1) logeant chaque agencement d'engrenage (4), chaque élément d'entraînement (5), chaque agencement d'engrenage (4) et chaque élément de sortie (6), est conçu déplaçable dans le sens longitudinal.

11. Procédé pour le montage d'au moins un assemblage (3) sur un assemblage de socle (16) au moyen de l'aide au montage (1) selon au moins l'une quelconque des revendications précédentes, pour l'insertion de chaque assemblage (3) à monter avec des moyens de fixation (12) sur l'assemblage de socle (16) au moyen de l'aide au montage (1) plus qu'un des moyens de fixation (12) étant actionnés simultanément.

12. Procédé selon la revendication 11, **caractérisé en ce que** l'aide au montage (1), pour le positionnement de chaque assemblage (3) à monter ainsi que des moyens de fixation (12) par rapport à l'assemblage de socle (16), est disposée au moyen du mécanisme de maintien et de décalage (13) sur au moins deux éléments de référence (17) formés sur l'assemblage de socle (16).

13. Procédé selon au moins l'une quelconque des revendications précédentes 11 ou 12, **caractérisé en ce que** l'aide au montage (1), pour l'insertion, provoquée par l'actionnement des moyens de fixation (12), de chaque assemblage (3) à monter sur l'assemblage de socle (16), est, au moyen du mécanisme de maintien et de décalage (13), disposée dans une position d'insertion sur l'assemblage de socle (16) ou, à la suite de la disposition sur l'assemblage de socle (16), décalée dans une position d'insertion, les moyens de fixation (12) dans la position d'insertion affleurant les logements de moyens de fixation coopérant avec les moyens de fixation (12).

14. Procédé selon au moins l'une quelconque des revendications précédentes 11 à 13, **caractérisé en ce que,** à la suite de l'insertion de chaque assemblage (3) dans l'assemblage de socle (16), l'aide au montage (1) est décalée au moyen du mécanisme de maintien et de décalage (13) de la position d'insertion par rapport à chaque assemblage (3) monté.

15. Procédé selon au moins l'une quelconque des revendications précédentes 11 à 14, **caractérisé en ce que,** dû au décalage au moyen du mécanisme de maintien et de décalage (13) de l'aide au montage (1) de la position d'insertion suivant l'insertion de chaque assemblage (3) dans l'assemblage de socle (16), chaque assemblage (3) fixé dans un logement (2) correspondant de l'aide au montage (1) est libéré du logement (2).
